Europäisches Patentamt

European Patent Office

Office européen des brevets

(19)

(11) Publication number: **0 148 008 B1**

# EUROPEAN PATENT SPECIFICATION

(12)

(45) Date of publication of patent specification: **10.07.91**  (51) Int. Cl.⁵: **G06F  15/40**, G06F 15/20

(21) Application number: **84308971.5**

(22) Date of filing: **20.12.84**

(54) **Word spelling correlatively-storing method and its circuit.**

(30) Priority: **23.12.83 JP 252156/83**

(43) Date of publication of application:
**10.07.85 Bulletin  85/28**

(45) Publication of the grant of the patent:
**10.07.91 Bulletin  91/28**

(84) Designated Contracting States:
**DE FR GB**

(56) References cited:
**US-A- 4 342 085**

**AFIPS CONFERENCE PROCEEDINGS, 1982
NATIONAL COMPUTER CONFERENCE, 7th
June - 10th June 1982, Houston, Texas,
pages 501-508, AFIPS PRESS, Arlington, US;
S.N. SRIHARI et al.: "Integration of bottom-up
and top-down contextual knowledge in text
error correction"**

**COMMUNICATIONS OF THE ACM, vol. 23, no.
12, December 1980, pages 676-687, New
York, US; J.L. PETERSON: "Computer pro-
grams for detecting and correcting spelling
errors"**

**IBM TECHNICAL DISCLOSURE BULLETIN, vol.**

**25, no. 11B, April 1983, pages 6246,-6247,
New York, US; R.D. PARROTT: "Spelling dic-
tionary incorporating word association"**

(73) Proprietor: **SHARP KABUSHIKI KAISHA
22-22 Nagaike-cho Abeno-ku
Osaka 545(JP)**

(72) Inventor: **Yoshida, Kunio
11-1102 3 ban 2-chome Oomiya-cho
Nara-shi Nara-ken(JP)**

(74) Representative: **Wright, Peter David John et al
R.G.C. Jenkins & Co. 26 Caxton Street
London SW1H 0RJ(GB)**

**Description**

The present invention relates to a word spelling storing method and circuit of a word processing machine and, more particularly, to a word spelling correlatively-storing method and circuit for use in a word processing machine.

Conventionally, in a word processing machine including an electronic dictionary and a word processor, a great number of word spellings must be stored. To store as many as possible, it is necessary to compress the word data in some way.

An example of such a compression method is disclosed in an article by S.N. Srihari et al. entitled "Integration of bottom-up and top-down contextual knowledge in text error correction" (AFIPS Conference Proceedings, 1982 National Computer Conference, 7th - 10th June 1982, Houston, Texas, pages 501-508 - AFIPS Press, Arlington, US). This article discloses a method of storing the spelling of a plurality of words in an electronic memory device wherein letters forming a part of a word are stored and connection data are stored associated with the letters representing the way in which each of the letters may be connected to one or more other letters such that the use of the connection data in accordance with pre-determined rules enables the assembling of a stored word from constituent letters.

However, this system requires the provision of an array of bits indicating word length and a bit indicating the end of a word. Such a system is therefore complex.

US 4,342,085 (Glickman et al.) also describes a method of storing the spelling of a plurality of words in an electronic memory device. However, this system differs from Srihari et al. in that words are divided into prefix, suffix and root constituents, the prefix and suffix constituents being stored in first memory and the root constituent being stored in a second memory. The described system concerns mainly the rules for dividing the words into these constituents and for reassembling the same.

It would be desirable to provide an improved data compression method.

It would further be desirable:

i) to provide an improved word spelling storing method and circuit of a word processing machine for compressing word spelling data;

ii) to provide an improved word storing method and circuit of a word processing machine comprising a memory circuit storing a great number of basic words and their correlated words in a minimum capacity; and

iii) to provide an improved word spelling storing method and circuit for a word processor comprising a memory storing a limited number of basic word spellings and their correlated word spellings.

In accordance with a first aspect of the present invention there is provided a method of storing the spelling of a plurality of words in an electronic memory device, wherein chains of one or more letters forming a part of one or more words are stored, and connection data are stored associated with the said chains representing the way in which each said chain may be connected to one or more other said chains, whereby use of the connection data in accordance with predetermined rules enables the assembling of a said stored word from constituent said chains; characterised in that the following six types of connection data are used, that is to say:

a first type, which represents a junction where a preceding chain may be followed by more than one alternative succeeding chain;

a second type, which represents a said alternative succeeding chain which may follow a preceding chain, where the alternative chain is not the final alternative chain which may follow the preceding chain;

a third type, which represents a said alternative succeeding chain which may follow a preceding chain, where the alternative chain is the final alternative chain which may follow the preceding chain;

a fourth type, which represents a connection where a preceding chain must be followed by a succeeding chain without alternative succeeding chains;

a fifth type, which represents a junction where a word may end with a preceding chain, or the preceding chain may be followed by more than one alternative succeeding chains; and

a sixth type, which represents a connecticn where a word may end with a preceding chain, or the preceding chain may be followed by a succeeding chain without alternative succeeding chains.

In accordance with a second aspect of the invention there is provided a memory circuit for a word processing machine comprising:

first means for storing correlation data between the letters of a first word and a seccnd word selected;

second means for storing the letters of the first word and the second word;

each of the correlation data being allotted at each clearance between the letters;

third means for inputting a word to detect whether the word is contained in the memory circuit or not; and

2

control means responsive to said first means and said second means for enabling said first means and said second means to output the correlation data and the letters, respectively, to compose a full word so as to compare it with the word inputted by said third means; wherein the following six types of correlation data are used, that is to say:

a first type which represents a junction where a preceding chain of one or more letters may be followed by more than one alternative succeeding chain;

a second type, which represents a said alternative succeeding chain which may follow a preceding chain, where the alternative chain is not the final alternative chain which may follow the preceding chain;

a third type, which represents a said alternative succeeding chain which may follow a preceding chain, where the alternative chain is the final alternative chain which may follow the preceding chain;

a fourth type, which represents a connection where a preceding chain must be followed by a succeeding chain without alternative succeeding chains;

a fifth type, which represents a junction where a word may end with a preceding chain, or the preceding chain may be followed by more than one alternative succeeding chains; and

a sixth type, which represents a connection where a word may end with a preceding chain, or the preceding chain may be followed by a succeeding chain without alternative succeeding chains.

## BRIEF DESCRIPTION OF THE DRAWINGS

The present invention will become more fully understood from the detailed description given hereinbelow and the accompanying drawings which are given by way of illustration only, and thus are not limitative of the present invention and wherein:

FIG. 1 is a table indicative of the principle of a word spelling correlatively-storing method of a memory of a word processing machine according to the present invention;

FIG. 2 is a storage format of storing word spelling data in the memory according to a first preferred embodiment of the present invention;

FIG. 3 is a storage format of storing word spelling data in the memory according to a second preferred embodiment of the present invention;

FIG. 4 is a block diagram of the memory circuit according to the present invention;

FIG. 5 is a flow chart of the operation of the circuit of FIG. 4;

FIG. 6 is a data format of storing a single word spelling with connection data and character data; and

FIGS. 7 and 8 are a table showing connection correlations in the present invention.

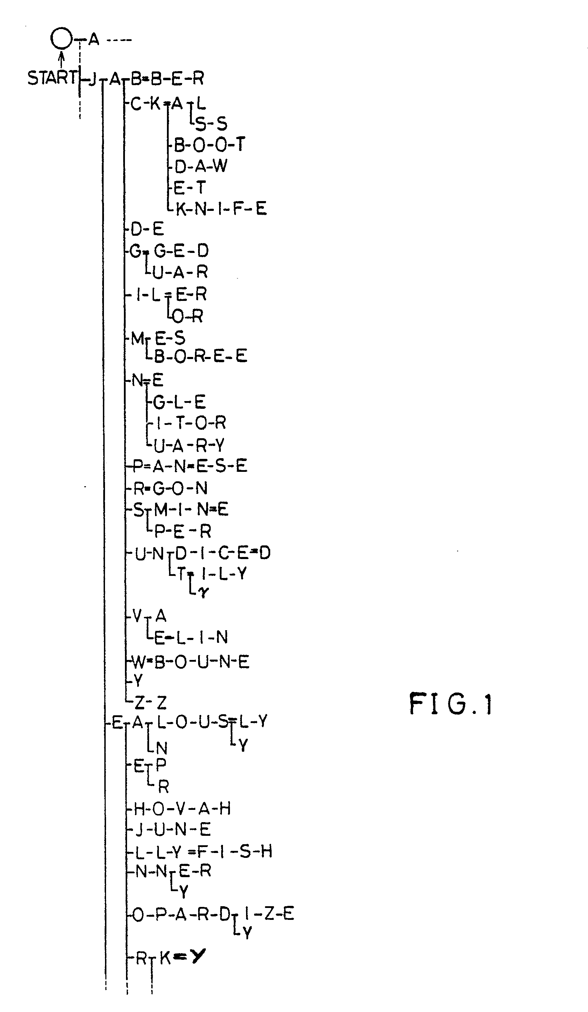

FIG. 1 is a table representative of the principle of storing word spelling data with compressing the data for use in a memory circuit in a word processing machine according to the present invention.

The principle of correlatively storing the word spelling data in accordance with the present invention is explained first with reference to FIG. 1.

TABLE I shows 100 words each starting with the character "J".

Characters: JAB, JABBER,JACK,JACKAL, JACKASS, JACKBOOT, JACKDAW, JACKET, JACKKNIFE, JADE, JAG, JAGGED, JAGUAR, JAIL, JAILER, JAILOR, JAMES, JAMBOREE, JAN, JANE, JANGLE, JANITOR, JANUARY, JAP, JAPAN, JAPANESE, JAR, JARGON, JASMIN, JASMINE, JASPER, JAUNDICE, JAUNDICED, JAUNT, JAUNTILY, JAUNTY, JAVA, JAVELIN, JAW, JAWBOUNE, JAY, JAZZ, JEALOUS,JEALOUSLY,JEALOUSY,JEAN,JEEP,JEER,JEHOVAH, JEJUNE, JELLY, JELLYFISH,JENNER, JENNY, JEOPARDIZE, JEOPARDY, JERK, JERKY, JERSEY,JERUSALEM, JESSAMIN,JESSAMINE,JEST,JESTER, JESUIT,JESUS,JET,JETTY,JEW, JEWEL,JEWELER, JEWELLER,JEWELRY, JEWESS, JEWISH, JIB, JIFF, JIG, JIGSAW, JILL, JILT, JIM, JIMMY, JINGLE, JINGO,JINX,JOB,JOBBER,JOCKEY,JOCOSE,JOCULAR,JOCUND,JOE,JOG, JOGGLE,JOHN,JOHNNY,JOIN,JOINER,JOINERY,and JOINT

TABLE I

The total letter number of TABLE I is 565 in which the average letter number per word is about 5.6. Therefore, a memory capacity for storing about 200,000 letters will be needed to store about 30,000 words.

In accordance with the present invention, some letters (including syllables, hyphens, marks, etc.) in each word are separated so that six types of connection data are assigned and stored to identify the connection between each letter and another to reproduce each full word, whereby the storage data of the words can be compressed in a small capacity.

FIG. 1 shows a table of compressing the letters of the words from "JABBER" to "JERK" of TABLE I in accordance with the present principle.

TABLE II is a table indicative of six types of specific symbols used for the present invention although not limited to these examples.

| Connection Data | Symbol |
|---|---|
| starting branch | $\top$ |
| midway branch | $\vdash$ |
| ending branch | $\llcorner$ |
| connecting | — |
| ending or starting branch | $\overline{\top}$ |
| ending or connecting | = |

TABLE II

TABLE III shows the respective meanings of the six types of specific symbols.

"$\top$" connecting from the left letter to either the right letter, or the latter letter of another word, that is, connecting a high-order letter of a word to a low-order letter of the word, or branching a high-order letter of a first word to a low-order letter of a second word

"$\vdash$" connecting from the left letter of a word to either the right letter of the same word or the subsequent word, that is, connecting a high-order letter of a first word to a low-order letter of the same word, or otherwise branching a high-order letter of a first word to a low-order letter of a second word

"$\llcorner$": branching from the former letter of a first word to the right letter of a second word, that is, branching a high-order letter of a first word to a low-order letter of a second word

"-": connecting from the left letter of a word to the right letter of the same word, that is, connecting a high-order letter of a word to a low-order letter of the same word

"$\overline{\top}$": terminating at the left letter, or branching from the left letter of a word to either the right letter of the same word or the right letter of a second word, that is, ending the letter chain at a high-order letter of a word, or otherwise connecting a high-order letter of a word to a low-order letter of the same word or branching a high-order letter of a first word to a low-order letter of a second word

"=": terminating at the left letter of a word, or connecting from the left letter to the right letter, that is, ending the letters at a high-order letter of a word, or otherwise connecting a high-order letter of a word to a low-order letter of the same word

TABLE III

In the above storage system, it can be detected whether the word "JACKAL" is stored in the memory by detecting the following sequence dependent upon the connection data:
"$\vdash$" → "J" → "$\top$" → "A" → "$\top$" → "$\vdash$" → "C" → "-" → "K" → "=" → "A" →
"$\top$" → "L"

A misspelled word "JAKAL" is not present in the memory because any connection is absent after "$\vdash$" → "J" → "$\top$" → "A". Another misspelled word "JACKALL" is not stored in the memory because of the same reason.

To store the word letters with the chain correlation as shown in FIG. 1, there will be the following two methods.

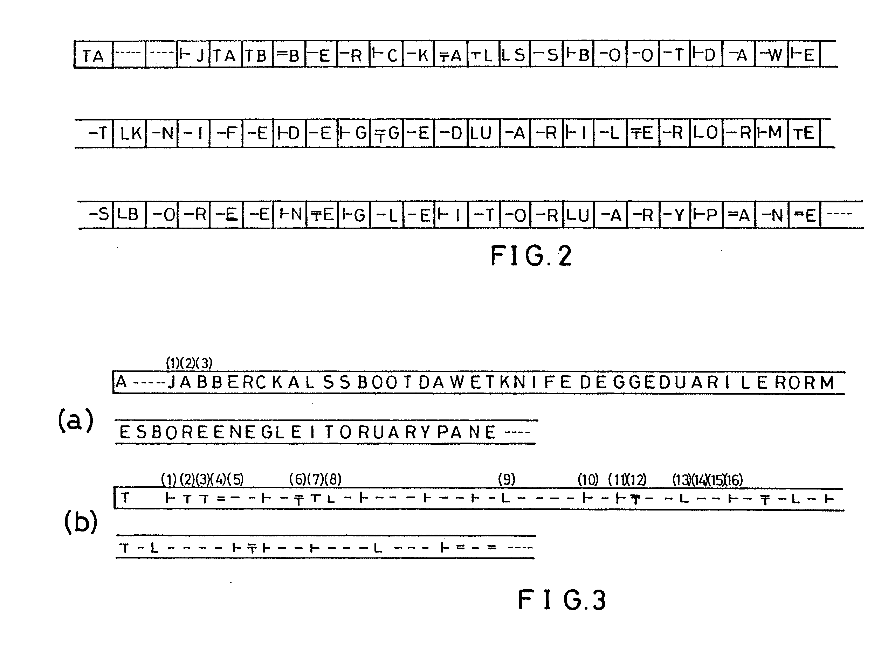

(1) The respective storage locations are provided for correlatively storing a great number of pairs of word data and connection data as shown in FIG. 2; and

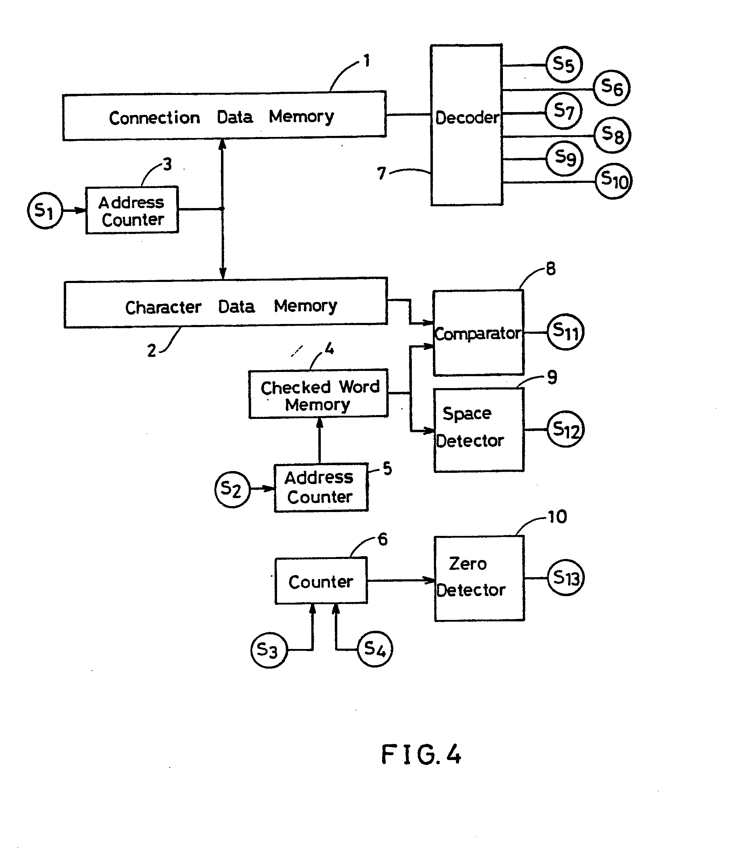

(2) First storage locations (a) are provided for storing only word data. Second storage locations (b) are

4

provided for storing only connection data. FIG. 3 shows this. The labels of some parenthesized figures of FIG. 3 are only for the latter explanation.

FIG.4 is a block diagram of the memory circuit according to the present invention.

The respective circuit elements are as follows:

Connection data memory 1: it stores the six types of connection data.

Character data memory 2: it stores character data of letters including the data for syllables, hyphens, marks, and the like.

Address counter 3: it serves as an address counter for the memories 1 and 2. It is initially reset to provide an initial address. The same address information is inputted into the memories 1 and 2 so that a connection data and the corresponding character data can be paired and outputted. A signal S1 is applied to the address counter 3 for advancing the address by one to output the next pair of connection data and character data.

Checked word memory 4: it stores each checked word which is inputted thereto. It is determined whether the spelling of the checked word is present in the memory circuit or absent so that the word is processed in the word processing machine.A space is inputted and annexed to the end of the letters of the checked word inputted.

Address counter 5: it serves for the checked word memory 4. It is initially reset. A signal S2 is inputted into the address counter 5 for advancing the address to provide the next address so that the checked word memory 4 outputs the next word.

Counter 6: it is provided for storing that the connection data is appropriate or not. A signal S3 is inputted to it to advance it by one and a signal S4 is inputted to reduce it by one.

Decoder 7: it serves to decode the connection data from the connection data memory 1.

Comparator 8: it is provided for comparing the character from the character data memory 2 with that from the checked word memory 4.

Space detector 9: it detects whether each character outputted from the checked word memory 5 is a space or not.

Zero detector 10: it is provided for detecting whether the contents of the counter 6 is zero or not.

In FIG. 4, the meanings of the cases for generating respective signals S5-S10 are summarized in TABLE IV.

S5:indicate that the output of the memory 1 is the starting branch $\top$

S6:indicate that the output of the memory 1 is the midway branch $\vdash$

S7:indicate that the output of the memory 1 is the ending branch $\llcorner$

S8:indicate that the output of the memory 1 is the connecting -

S9:indicate that the output of the memory 1 is ending or the starting branch $\overline{\top}$

S10:indicate that the output of the memory 1 is the ending or connecting =

TABLE IV

A word is inputted into the checked word memory 4 to detect whether the word is stored in the memory circuit or not. Based on this detection, the word is processed by the word processing machine. The comparison between the inputted word and the stored word is enabled by composing a full word from the character data of the character data memory 3 and the connection data of the connection data memory 1.

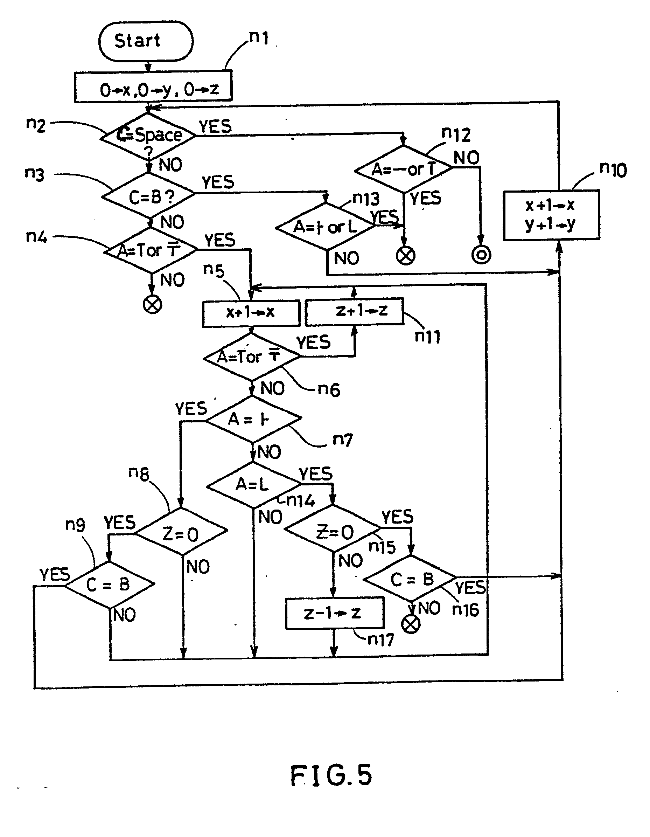

FIG. 5 is a flow chart of the operation of the memory circuit. In FIG. 5, the double circle "◎" represents a detection that the checked word is present. A X-circle "⊗" indicates a detection that the checked word is absent. "x" is a count of the address counter 3. "y" is a count of the address counter 5. "z" is a count of the counter 6.

Further, in FIG. 5, "A" indicates a connection data developed from the connection data memory 1. "B" represents a character data from the character data memory 2. "C" is a checked word.

TABLE V shows processed contents in the steps.

| Step | Processed Contents |
| --- | --- |
| n1 | to reset x, y, and z |
| n5 | to add "l" to x |
| n11 | to add "l" to z |
| n17 | to subtract "l" from z |
| n10 | to add "l" to x and y |

TABLE V

5

After "YES" detection of step n4, the subsequent steps are conducted to retrive the connection data following "$\top$" and "$\bar{\top}$". The following operations are executed after the execution of step n5 has been completed:

(1) z = 0:

    (a) If the output A of the memory 1 is "$\top$" or "$\bar{\top}$" the following operations are conducted;

"z + I" → "z"

"x + I" → "x"

    (b) If the output A of the memory 1 is "$\vdash$", the output of the memory 2 is compared with the character data from the memory 4. If "YES" is detected, the program can be advanced far from the loop. If "NO" is detected, an operation of "x + I" → "x" is conducted.

    (c) If the output A of the memory 1 is "$\llcorner$", the output of the memory 1 is compared with the character data from the memory 4. If "YES", the program is advanced far from the loop. If "NO", it is detected that the word is absent.

(2) z≠0:

    (a) If the output A of the memory 1 is "$\top$" or "$\bar{\top}$" in step n6, the following operations are executed:

"z + I" → "z" in step n11

"x + I" → "x" in step n5

    (b) If the output A of the memory 1 is "$\vdash$", an operation of "x + I" → "x" is executed.

    (c) If the output A of the memory 1 is "$\llcorner$" in step n14, the following operations are conducted:

"z-I" → "z" in step n17

"x + I" → "x" in step n5

(3) If the output A of the memory 1 is "-" and " = ", an operation of "x + I" → "x" is executed in step n5.

For example, a word "JAGUAR" is retrieved as follows:

Step n1: x, y, and y are reset to replace them with zero. At this time, the memories 1, 2, and 4 output "$\top$", "A" and "J", respectively.

Steps n2 and n3: "NO" is detected.

Step n4: "YES" is detected to thereby select step n5.

Finally, "x" selects (1) of FIG. 3(b), in which "y" = "0" and "z" = "0". The memories 1,2, and 4 output "$\vdash$","J", and "J", respectively.

Step n6: "NO" is detected.

Steps n7, n8, and n9: "YES" is detected.

Step n10: this step is conducted for "x" to select (2) of FIG. 3(b). "y" becomes "1".

Steps n2, n3, and n13: Since both memories 2 and 4 output "A", and the memory 1 develops "$\top$", "NO" is detected in step n2 and "YES" is detected in step n3, and "NO" is detected in step n13. The operation of step n10 is repeated. Here, "x" selects (3) of FIG. 3(b) so that "y" = "2" and the memory 1 develops "$\top$". In steps n2 and n3, "NO" is detected. In step n4, "YES" is detected. In step n5, "x" is increased by one. "x" selects (4) of FIG. 3(b).

The program of step n5 is reselected so that "x" selects (5) of FIG. 3(b). "x" is continued to be advanced until the memory 1 outputs "$\top$"," = ", and "$\llcorner$". In step n5, when "x" selects (6) of FIG. 3(b), step n11 is selected. When "x" selects (7) of FIG. 3(b), step n11 is conducted so that "z" = "2".

After step n5, "x" selects (6) of FIG. 3(b) so that the operation of step n11 is conducted. "x" selects (7) of FIG. 3(b) so that the operation of step n11 is executed to attain "z" = "2".

After step n5, "x" selects (8) of FIG. 3(b) so that the operation of step n17 is executed to thereby provide "z" = 1. When "x" selects (10) of FIG. 3(b), step n7 is advanced to step n8. In step n9 "NO" is detected. "x" is further proceeded. When "x" selects (11) of FIG. 3(b), steps n7 - n8 - n9 are selected. Step n10 is carried out so that "y" = "3" and "z" = "0". Steps n2 and n3 are checked.

Then, "x" selects (12) of FIG. 3(b) and "y" remains "3".

Because the memories 1, 2, and 4 output "$\bar{\top}$", "G", and "U", "NO" is detected in steps n2 and n3, and "YES" is detected in step n4, so that "x + I" → "x" is merely conducted. When "x" selects (13) of FIG. 3-(b), "NO" is steps n6 and n7, and "YES" is steps n14, n15 and n16, whereby step n10 is reselected.

When "x" selects (14) of FIG. 3(b), because of "y" = "4", the memories 1, 2, and 4 develop "-", "A", and "A". Therefore, "YES" is detected in step n3. At the next stage, "YES" is detected so that the checked word "JAGUAR" is completely checked.

The operation of step n10 is executed so that "x" selects (16) of FIG. 3(b) to output "$\vdash$". "y" = "6" enables "SPACE" to be outputted. The detection of step n2 is established, but the detection of step n12 does not stand. Here, the double circle of "◎" is reached.

When the checked word is absent, one of three X-circles of "⊗" is reached.

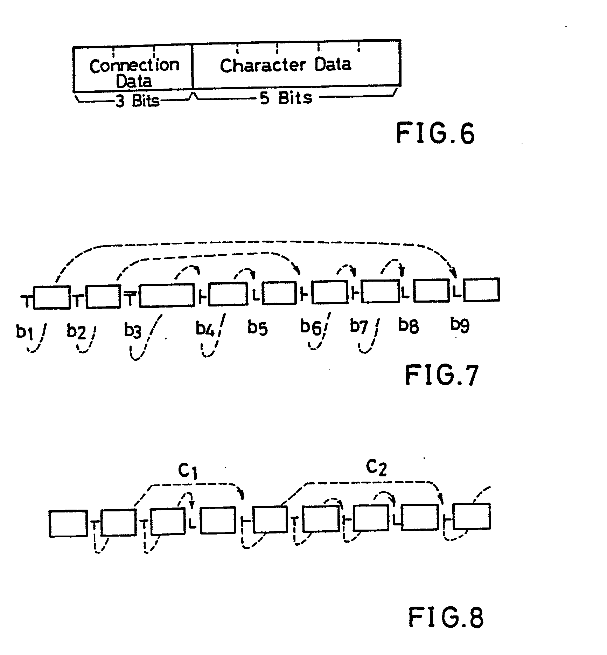

FIG. 6 shows a constitution of a single data unit of connection data and character data. Each connection data is of 3 bits while each character data is of 5 bits, so that the data unit is of 8 bits.

In case where the character data and the connection data are aligned as shown in FIGS. 2 and 3, it must be decided where the starting branch, and the ending or the starting branch reach. This is a problem. FIG. 7 shows a drawing explaining the method to solve this problem.

In FIG. 7, each block of "□" indicates two types of connection data of "-" and " = ", and the character data. In other words, the block does not contain the other four types of connection data of "⊤","⊤","⊢", and "└" so that the characters are necessarily connected and teminated midway, but does not branch anymore as follows:

b3→b4→b5

b2→ b6→ b7→ b8

b1→ b9

Therefore, to retrieve some checked word, upon the branch of "b2", if the right letter a not connected further, the right side connection data of "b6", "b7", and "b8" are reviewed. If some connection can be detected, the character should be connected rightward. When any connection cannot be detected at the right side of "b8", it is thereby detected that the character is absent in the memory. In order to retrieve any connection data from "b2" to "b6", the connection data are only checked with proceeding rightward, so as to retrieve "⊢" and "└". If "⊤" or "⊤" is detected, the connection data of "⊢" and "└" are omitted until the type of connection data "└" is detected by the same number. In the example of FIG. 7, the correct connection is attained by searching the types of connection data of "⊢"and "└" with omitting the "b4" and "b5" since the "b3" is "⊤".

FIG. 8 shows another example similar to the situation of FIG. 7.

Regarding the checking of the count "x" as described in FIG. 4, it may take long to increase the count "x"by one when the capacity of the memory is vast. It may be preferred that the leading letter of each checked word inputted into the checked word memory 4 be detected to select an appropriate count for "x". In the case of "JAGUAR" as stated above, an additional table is provided for preparing and defining some address values for "x" to select the connection data memory 1 based on the leading letter "J". By operating the following, step n6 of FIG. 5 and the subsequent steps are to directly be selected:

"0"→ "z"

"0"→ "y"

After "YES" in step n4 and "YES" in step n9 are detected, information representative of the subsequent address or the distance should be added as shown in "c1" and "c2" of FIG. 8 to further become speedy.

In the above-mentioned preferred embodiment of the present invention, only words are stored. It may be possible that any other information relating to words can be annexed to them. This information may be translated words or part of speech or the like.

While only certain embodiments of the present invention have been described, it will be apparent to those skilled in the art that various changes and modifications may be made therein without departing from the scope of the present invention as claimed.

## Claims

1. A method of storing the spelling of a plurality of words in an electronic memory device,

wherein

chains of one or more letters forming a part of one or more words are stored, and connection data are stored associated with the said chains representing the way in which each said chain may be connected to one or more other said chains,

whereby use of the connection data in accordance with predetermined rules enables the assembling of a said stored word from constituent said chains;

characterised in that the following six types of connection data are used, that is to say:

a first type (⊤),which represents a junction where a preceding chain may be followed by more than one alternative succeeding chain;

a second type (⊢), which represents a said alternative succeeding chain which may follow a preceding chain, where the alternative chain is not the final alternative chain which may follow the preceding chain;

a third type (L), which represents a said alternative succeeding chain which may follow a preceding chain, where the alternative chain is the final alternative chain which may follow the preceding chain;

a fourth type (-), which represents a connection where a preceding chain must be followed by a succeeding chain without alternative succeeding chains;

a fifth type (T̄), which represents a junction where a word may end with a preceding chain, or the preceding chain may be followed by more than one alternative succeeding chains; and

a sixth type (=), which represents a connection where a word may end with a preceding chain, or the preceding chain may be followed by a succeeding chain without alternative succeeding chains.

2. A method according to claim 1 in which the said chains are stored linearly and each item of said connection data is associated with a respective chain.

3. A method according to claim 2 in which each said item of connection data is associated with a chain which is a succeeding chain in the connection or junction represented by the connection data,

connection data of the first and fifth types (T,T̄) being associated with a said alternative succeeding chain which immediately follows the relevant preceding chain in the order of the said linear storage,

connection data of the second and third types (⊢,L) being associated with said alternative succeeding chains which do not immediately follow the relevant preceding chain in the order of the said linear storage, connection data of the third type being associated with the last (in order of the said linear storage) alternative of a group of said alternatives, and

the said succeeding chain in connections represented by data of the fourth and sixth types (-, =) always immediately following the relevant preceding chain in the order of the said linear storage.

4. A method according to any one of the preceding claims in which each said chain comprises a single letter only.

5. An electronic memory device (1,2) in which the spelling of a plurality of words is stored in accordance with the method of any one of the preceding claims.

6. An electronic memory device (1,2) in which the spelling of a plurality of words is stored in accordance with any one of the methods of claim 2, claim 3 or claim 4, when dependent on claim 2, in which each said chain and its associated connection data are stored at corresponding locations in respective separate memory areas (1,2).

7. Apparatus for testing the spelling of an input word, comprising an electronic memory device (1,2) according to claim 5 or claim 6, the apparatus in use stepping through the chains stored in the memory device and input the word in unison and comparing them for as long as they match, and, if the chains stored in the memory device cease to match the word, using the said connection data to find alternative chains to replace the non-matching chain in the said comparison and resuming the said stepping in unison if an alternative chain is found which does match the input word, until either
a. the end of the input word is reached and the connection data in the memory device designates the matching chain as a permitted word end, or
b. the end of the input word is reached and the connection data in the memory device does not designate the matching chain as a permitted word end, or
c. the input word and the compared chain do not match and no alternative chain is found,

the apparatus providing an output in case a. indicating that the input word matches the spelling of a word stored in the memory device and providing an output in cases b. and c. indicating that the input word does not match the spelling of a word stored in the memory device.

8. A memory circuit for a word processing machine comprising:

first means (1) for storing connection data between the letters of a first word and a second word selected;

second means (2) for storing the letters of the first word and the second word;

each of the connection data being alotted between each pair of letters;

third means (4) for inputting a word to detect whether the word is contained in the memory circuit or not; and

control means (7,8,9) responsive to said first means and said second means for enabling said first means and said second means to output the connection data and the letters, respectively, to compose a full word so as to compare it with the word inputted by said third means;

wherein the following six types of connection data are used, that is to say:

a first type (⊤), which represents a junction where a preceding chain of one or more letters may be followed by more than one alternative succeeding chain;

a second type (⊢), which represents a said alternative succeeding chain which may follow a preceding chain, where the alternative chain is not the final alternative chain which may follow the preceding chain;

a third type (∟), which represents a said alternative succeeding chain which may follow a preceding chain, where the alternative chain is the final alternative chain which may follow the preceding chain;

a fourth type (-), which represents a connection where a preceding chain must be followed by a succeeding chain without alternative succeeding chains;

a fifth type (T̄), which represents a junction where a word may end with a preceding chain, or the preceding chain may be followed by more than one alternative succeeding chains; and

a sixth type (=), which represents a connection where a word may end with a preceding chain, or the preceding chain may be followed by a succeeding chain without alternative succeeding chains.

**Revendications**

1. Procédé d'enregistrement de l'orthographe d'une multiplicité de mots dans un dispositif à mémoire électronique,
dans lequel
sont enregistrées des chaînes d'une ou plusieurs lettres constituant une partie d'un ou plusieurs mots, ainsi que des données de liaison associées auxdites chaînes et représentant la manière suivant laquelle chacune desdites chaînes peut être reliée à une autre ou plusieurs autres desdites chaînes,
l'utilisation des données de liaison conformément à des règles prédéterminées permettant l'assemblage d'un desdits mots enregistrés à partir desdites chaînes constitutives;
caractérisé en ce que les six types suivants de données de liaison sont utilisés, à savoir:
un premier type (⊤), qui représente une jonction au niveau de laquelle une chaîne précédente peut être suivie de plus d'une chaîne alternative suivante;
un second type (⊢), qui représente une dite chaîne alternative suivante qui peut suivre une chaîne précédente, la chaîne alternative n'étant pas la chaîne alternative finale qui peut suivre la chaîne précédente;
un troisième type (∟), qui représente une dite chaîne alternative suivante qui peut suivre une chaîne précédente, la chaîne alternative étant la chaîne alternative finale qui peut suivre la chaîne précédente;
un quatrième type (-), qui représente une liaison au niveau de laquelle une chaîne précédente doit

9

être suivie d'une chaîne suivante sans chaînes alternatives suivantes;

un cinquième type ($\overline{T}$), qui représente une jonction au niveau de laquelle un mot peut se terminer par une chaîne précédente, ou la chaîne précédente peut être suivie de plus d'une chaîne alternative suivante; et

un sixième type ($=$), qui représente une liaison au niveau de laquelle un mot peut se terminer par une chaîne précédente, ou la chaîne précédente peut être suivie d'une chaîne suivante sans chaînes alternatives suivantes.

2. Procédé selon la revendication 1, dans lequel lesdites chaînes sont enregistrées linéairement et chaque élément desdites données de liaison est associé à une chaîne respective.

3. Procédé selon la revendication 2, dans lequel chaque dit élément de données de liaison est associé à une chaîne qui est une chaîne suivante dans la liaison ou la jonction représentée par les données de liaison,

les données de liaison du premier et du cinquième types ($\overline{T}$,$\overline{T}$) étant associées avec l'une desdites chaînes alternatives suivantes qui suit immédiatement la chaîne précédente concernée dans l'ordre dudit enregistrement linéaire,

les données de liaison du second et du troisième types ($\vdash$, $\mathsf{L}$) étant associées auxdites chaînes alternatives suivantes qui ne suivent pas immédiatement la chaîne précédente concernée dans l'ordre dudit enregistrement linéaire, les données de liaison du troisième type étant associées à la dernière chaîne alternative (dans l'ordre dudit enregistrement linéaire) d'un groupe desdites chaînes alternatives, et

ladite chaîne suivante dans les liaisons représentées par les données des quatrième et sixième types (-, $=$) suivant toujours immédiatement la chaîne précédente concernée dans l'ordre dudit enregistrement linéaire.

4. Procédé selon l'une quelconque des revendications précédentes, dans lequel chacune desdites chaînes ne comprend qu'une seule lettre.

5. Dispositif de mémoire électronique (1,2), dans lequel l'orthographe d'une multiplicité de mots est enregistré conformément au procédé de l'une quelconque des revendications précédentes.

6. Dispositif de mémoire électronique (1,2), dans lequel l'orthographe d'une multiplicité de mots est enregistré conformément à l'un quelconque des procédés des revendications 2, 3 ou 4, lorqu'elle dépend de la revendication 2, dans lequel chacune desdites chaînes et ses données de liaison associées sont enregistrées en des emplacements correspondants dans des zones de mémoire séparées respectives (1,2).

7. Appareil d'essai de l'orthographe d'un mot d'entrée, comprenant un dispositif de mémoire électronique (1,2) selon la revendication 5 ou la revendication 6, l'appareil, en fonctionnement, parcourant pas à pas les chaînes enregistrées dans le dispositif de mémoire et le mot d'entrée à l'unison et les comparant tant qu'ils concordent et, si les chaînes enregistrées dans le dispositif de mémoire cessent de concorder avec le mot, utilisant lesdites données de liaison pour trouver des chaînes alternatives pour remplacer la chaîne non concordante dans ladite comparaison et reprenant ledit parcours pas à pas à l'unison si une chaîne alternative qui concorde avec le mot d'entrée est trouvé, jusqu'à ce que soit:

a. la fin du mot d'entrée soit atteinte et les données de liaison contenues dans le dispositif de mémoire indiquent que la chaîne concordante constitue une fin de mot permise, soit

b. la fin du mot d'entrée est atteinte et les données de liaison contenues dans le dispositif de mémoire n'indiquent pas que la chaîne concordante est une fin de mot permise, soit encore

c. le mot d'entrée et la chaîne comparée ne concordent pas et aucune chaîne alternative n'est trouvée, l'appareil fournissant une sortie dans le cas a. indiquant que le mot d'entrée concorde avec l'orthographe d'un mot enregistré dans le dispositif de mémoire et fournissant une sortie dans les cas b. et c. indiquant que le mot d'entrée ne concorde pas avec l'orthographe d'un mot enregistré dans le dispositif de mémoire.

8. Circuit de mémoire pour une machine de traitement de texte comprenant:

un premier moyen (1) pour enregistrer des données de liaison entre les lettres d'un premier mot et d'un second mot sélectionné;

un second moyen (2) pour enregistrer les lettres du premier mot et du second mot;

chacune des données de liaison étant prévue entre chaque paire de lettres;

un troisième moyen (4) pour introduire un mot pour déterminer si le mot est contenu dans le circuit de mémoire ou non; et

des moyens de commande (7, 8, 9) sensibles audit premier moyen et audit second moyen pour autoriser ledit premier moyen et ledit second moyen à délivrer les données de liaison et les lettres, respectivement, pour composer un mot entier de façon à le comparer au mot introduit par ledit troisième moyen;

dans lequel les six types suivants de données de liaison sont utilisés, à savoir:

un premier type (⊤), qui représente une jonction au niveau de laquelle une chaîne précédente comportant une ou plusieurs lettres peut être suivie de plus d'une chaîne alternative suivante;

un second type (⊢), qui représente une dite chaîne alternative suivante qui peut suivre une chaîne précédente, la chaîne alternative n'étant pas la chaîne alternative finale qui peut suivre la chaîne précédente;

un troisième type (L), qui représente une dite chaîne alternative suivante qui peut suivre une chaîne précédente, la chaîne alternative étant la chaîne alternative finale qui peut suivre la chaîne précédente;

un quatrième type (-), qui représente une liaison au niveau de laquelle une chaîne précédente doit être suivie d'une chaîne suivante sans chaînes alternatives suivantes;

un cinquième type (⊤̄), qui représente une jonction au niveau de laquelle un mot peut se terminer par une chaîne précédente, ou la chaîne précédente peut être suivie de plus d'une chaîne alternative suivante; et

un sixième type (=), qui représente une liaison au niveau de laquelle un mot peut se terminer par une chaîne précédente, ou la chaîne précédente peut être suivie d'une chaîne suivante sans chaînes alternatives suivantes.

## Ansprüche

1. Verfahren zur Speicherung der Orthographie einer Mehrzahl von Wörtern in einer elektronischen Speichervorrichtung, bei der Ketten von mindestens einem oder mehreren Buchstaben, die einen Teil von einem oder mehreren Worten bilden sowie Verbindungsdaten, welche die Art, wie jede Kette mit einer oder mehreren anderen Ketten zu verbinden ist in Zuordnung zu den Ketten, gespeichert werden, wobei die Anwendung der Verbindungsdaten in Übereinstimmung mit vorgegebenen Regeln die Zusammensetzung eines jeweils gespeicherten Worts aus Komponenten der Ketten ermöglicht:

   **dadurch gekennzeichnet**, daß die folgenden sechs Typen von Verbindungsdaten verwendet werden, nämlich:

   eine erster Typ (T), der eine Verknüpfung repräsentiert, bei der mehr als eine alternative Folgekette auf eine vorhergehende Ketten folgen kann;

   ein zweiter Typ (⊢), der diejenige alternative Folgekette repräsentiert, die auf eine vorhergehende folgen kann, wobei die betreffende alternative Kette nicht die letzte ihrer Art ist, die auf die vorhergehende Kette folgen kann;

   ein dritter Typ (L), der eine bestimmte der alternativen Folgeketten repräsentiert, die auf eine vorhergehende Ketten folgen kann, wobei diese alternative Kette die letzte der auf die vorhergehende Kette folgenden Alternativketten ist;

   ein vierter Typ (-), der eine Verknüpfung repräsentiert, bei der eine Nachfolgekette ohne alternative Nachfolgeketten auf eine vorhergehende Kette folgen muß;

   ein fünfter Typ (⊤̄), der eine Verknüpfung repräsentiert, bei der ein Wort mit einer vorhergehenden Kette enden kann, oder bei der mehr als eine der alternativen Folgeketten auf eine vorhergehende Ketten folgen kann; und

   ein sechster Typ (=), der eine Verbindung repräsentiert, bei der ein Wort mit einer vorhergenden Kette enden kann, oder bei der eine Folgekette ohne alternative Folgeketten auf die vorhergehende Kette folgen kann.

2. Verfahren nach Anspruch 1, bei dem die Ketten in linearer Folge gespeichert sind und jede (Informations-) Einzelheit der Verbindungsdaten einer entsprechenden Kette zugeordnet ist.

3. Verfahren nach Anspruch 2, bei dem jede Einzelheit der Verbindungsdaten einer Kette zugeordnet ist, die eine Folgekette in der Verbindung oder Verknüpfung darstellt, die durch die Verbindungsdaten

11

EP 0 148 008 B1

repräsentiert ist,

bei dem die Verbindungsdaten des ersten und fünften Typs (T, T̄) einer alternativen Folgekette zugeordnet sind, die der relevanten vorhergehenden Kette in der Hierarchie der linearen Folgespeicherung unmittelbar folgt,

bei dem die Verbindungsdaten des zweiten und dritten Typs (⊢, L) den alternativen Folgeketten zugeordnet sind, die der relevanten vorhergehenden Kette in der Hierarchie der linearen Folgespeicherung nicht unmittelbar folgen, wobei die Verbindungsdaten des dritten Typs der letzten Alternative (in der Hierarchie der linearen Folgespeicherung) aus der Gruppe dieser Alternativen zugeordnet sind, und

bei dem die Folgekette in Verbindungen, die durch Daten des vierten und sechsten Typs (-, =) repräsentiert sind, stets der relevanten vorhergehenden Kette in der Hierarchie der linearen Abspeicherung unmittelbar folgt.

4. Verfahren nach einem der vorhergehenden Ansprüche, bei dem jede dieser Ketten nur einen einzigen Buchstaben umfaßt.

5. Elektronische Speichereinrichtung (1,2), in der die Orthographie einer Mehrzahl von Worten entsprechend dem Verfahren nach wenigstens einem der vorhergehenden Ansprüche gespeichert ist.

6. Elektronische Speichereinrichtung (1,2), in der die Orthographie einer Mehrzahl von Worten entsprechend dem Verfahren nach wenigstens einem der Ansprüche 2,3 oder - soweit abhängig von Anspruch 2 - nach Anspruch 4 gespeichert sind, wobei jede Kette und die ihr zugeordneten Verbindungsdaten an zugeordneten Plätzen in entsprechenden separaten Speicherbereichen (1, 2) abgespeichert sind.

7. Einrichtung zum Prüfen der Orthographie eines Eingabeworts mit einer elektronischen Speichereinrichtung (1,2) nach Anspruch 5 oder 6, bei welcher Einrichtung die in der Speichereinrichtung gespeicherten Ketten schrittweise zusammen mit dem Eingabewort aufgerufen und solange Übereinstimmung besteht verglichen werden, und sofern die in der Speichereinrichtung gespeicherten Ketten mit dem Wort nicht mehr zusammenpassen die Verbindungsdaten verwendet werden, um alternative Ketten aufzufinden, welche die bei dem Vergleich nicht passende Kette ersetzen und bei dem der gemeinsame schrittweise Zugriff wieder aufgenommen wird, wenn eine mit dem Eingabewort zusammenpassende alternative Kette aufgefunden wird, solange bis entweder

a. das Ende des Eingabeworts erreicht ist und die Verbindungsdaten in der Speichervorrichtung die passenden Kette als ein zulässiges Wortende anzeigen, oder bis

b. das Ende des Eingabeworts erreicht ist und die Verbindungsdaten in der Speichereinrichtung nicht anzeigen, daß eine als zulässiges Wortende passende Kette vorliegt, oder bis

c. das Eingabewort und die verglichene Kette nicht zusammenpassen und keine alternative Kette aufgefunden wird, und wobei

die Einrichtung im Falle a. eine Ausgabe liefert, die anzeigt, daß das Eingabewort mit der Orthographie eines in der Speichereinrichtung gespeicherten Worts übereinstimmt und in den Fällen b. und c. eine Ausgabe liefert, die anzeigt, daß das Eingabewort mit der Orthographie eines in der Speichereinrichtung gespeicherten Worts nicht übereinstimmt.

8. Speicherschaltung führ einen Wortprozessor mit:

ersten Mitteln (1) zur Speicherung von Verbindungsdaten zwischen den Buchstaben eines ersten Worts und eines zweiten gewählten Worts;

zweiten Mitteln (2) zur Speicherung der Buchstaben des ersten Worts und des zweiten Worts;

wobei die Verbindungsdaten zwischen jedem Paar der Buchstaben angeordnet sind;

dritten Mitteln (4) zur Eingabe eines Worts zum Feststellen, ob dieses Wort in der Speicherschaltung enthalten ist oder nicht; sowie mit

- auf die ersten und zweiten Mittel ansprechenden Steuermitteln (7,8.9) zur Aktivierung der ersten und zweiten Mittel zum Ausgeben der Verbindungsdaten bzw. der Buchstaben um ein volles Wort zusammenzusetzen, das mit dem über die dritten Mittel eingegebenen Wort verglichen wird;

bei welcher Speicherschaltung die folgenden sechs Typen von Verbindungsdaten benützt werden, nämlich:

ein erster Typ (T), der eine Verknüpfung repräsentiert, bei der mehr als eine alternative Folgekette auf eine vorhergehende Kette aus einem oder mehreren Buchstaben folgen kann;

ein zweiter Typ (⊢), der diejenige alternative Folgekette repräsentiert, die auf eine vorhergehende

12

folgen kann, wobei die betreffende alternative Kette nicht die letzte ihrer Art ist, die auf die vorhergehende Kette folgen kann;

ein dritter Typ (L), der eine bestimmte der alternativen Folgeketten repräsentiert, die auf eine vorhergehende Ketten folgen kann, wobei die alternative Kette die letzte der auf die vorhergehende Kette folgenden Alternativketten ist;

ein vierter Typ (-), der eine Verknüpfung repräsentiert, bei der eine Nachfolgekette ohne alternative Nachfolgeketten auf eine vorhergehende Kette folgen muß;

ein fünfter Typ ($\overline{T}$), der eine Verknüpfung repräsentiert, bei der ein Wort mit einer vorhergehenden Kette enden kann, oder bei der mehr als eine der alternativen Folgeketten auf eine vorhergehende Ketten folgen kann; und

ein sechster Typ (=), der eine Verbindung repräsentiert, bei der ein Wort mit einer vorhergenden Kette enden kann, oder bei der eine Folgekette ohne alternative Folgeketten auf die vorhergehende Kette folgen kann.

FIG.1

14

EP 0 148 008 B1

| TA | ---- | ---- | ⊢J | TA | TB | =B | ⊢E | ⊢R | ⊢C | ⊢K | ⊤A | ⊤L | ⊩S | ⊢S | ⊢B | -O | -O | -T | ⊩D | ⊣A | ⊣W | ⊩E |

| -T | LK | -N | -I | -F | -E | ⊢D | -E | ⊢G | ⊤G | -E | -D | LU | -A | -R | ⊢I | -L | ⊤E | -R | LO | -R | ⊢M | ⊤E |

| -S | LB | -O | -R | -E | -E | ⊢N | ⊤E | ⊢G | -L | -E | ⊢I | -T | -O | -R | LU | -A | -R | -Y | ⊢P | =A | -N | ⊸E | ---- |

**FIG.2**

(a)

```
         (1)(2)(3)
A-----JABBERCKALSSBOOTDAWETKNIFEDEGGEDUARILERORM

ESBOREENEGLEITORUARYPANE----
```

(b)

```
     (1)(2)(3)(4)(5)     (6)(7)(8)                    (9)        (10)  (11)(12)    (13)(14)(15)(16)
T    ⊢ ⊤ ⊤ = - - ⊢ - ⊤ ⊤ L - ⊢ - - - ⊢ - - ⊢ - L - - - - ⊢ - ⊢ ⊤ - - L - - ⊢ - ⊤ - L - ⊢

⊤ - L - - - - ⊢ ⊤ ⊢ - - ⊢ - - - L - - - ⊢ = - = ----
```

**FIG.3**

FIG.4

FIG.5

FIG.6

FIG.7

FIG.8